# EUROPÄISCHE PATENTANMELDUNG

(11) **EP 0 977 108 A2**
(43) Veröffentlichungstag der Anmeldung: **02.02.2000**
(21) Anmeldenummer: 99202380.4
(22) Anmeldetag: 20.07.1999
(51) Int. Cl.: G06F 1/00

(54) **Anordnung zur elektronischen Verarbeitung von Datensignalen**

(30) Priorität: 29.07.1998 DE 19834076
(71) Anmelder: Philips Corporate Intellectual Property GmbH, 52064 Aachen (DE); Koninklijke Philips Electronics N.V., 5621 BA Eindhoven (NL)
(72) Erfinder: Rabeler, Thorwald, c/o Philips Corp. Intel. P.GmbH, 22335 Hamburg (DE)
(74) Vertreter: Peters, Carl Heinrich

(57) **Zusammenfassung**

Beschrieben wird eine Anordnung zur elektronischen Verarbeitung von Datensignalen mit einer Befehls-Ausführeinheit ( 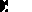 Execution") und einer Befehls-Speichereinheit, die über eine Befehls-Holeinheit ( 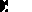 Prefetch") miteinander zum Austausch von Adreß- und/oder Befehlssignalen verknüpft sind, worin zum Ausführen eines Befehls zunächst von der Befehls-Holeinheit ein oder mehrere Adreßsignale an die Befehls-Speichereinheit geleitet werden zum Auswählen vorgebbarer, in der Befehls-Speichereinheit gespeicherter Befehlssignale, welche daraufhin von der Befehls-Speichereinheit über die Befehls-Holeinheit an die Befehls-Ausführeinheit weitergeleitet werden und worin der Befehls-Ausführeinheit außerdem von der Befehls-Holeinheit ein Verriegelungssignal zugeleitet wird, durch das die Ausführung eines jeweiligen Befehls in der Befehls-Ausführeinheit auf die Übermittlung eines oder mehrerer Befehlssignale hin so lange verhindert wird, bis alle zur Ausführung des jeweiligen Befehls notwendigen Befehlssignale der Befehls-Ausführeinheit verfügbar sind (Soll-Ausführungszeitpunkt), ferner umfassend eine Zufallsgeneratoreinheit und eine mit dieser verbundene Sperrstufe, wobei die Sperrstufe in die zur Übertragung des Verriegelungssignals dienende Verknüpfung zwischen der Befehls-Holeinheit und der Befehls-Ausführeinheit eingefügt ist und von der Zufallsgeneratoreinheit zum Verlängern der Dauer des Anliegens des Verriegelungssignals über den Soll-Ausführungszeitpunkt hinaus um eine gemäß einer Zufallsfunktion gewählte Zeitspanne angesteuert wird.

Mit der erfindungsgemäßen Anordnung wird das Zeitverhalten derart verzerrt, daß Zeitattacken erschwert oder unmöglich gemacht werden.

## Beschreibung

Die Erfindung bezieht sich auf eine Anordnung zur elektronischen Verarbeitung von Datensignalen.

Derartige Anordnungen werden u.a. in Systemen zur Zugangs- bzw. Zugriffskontrolle eingesetzt. Ein bevorzugtes dieser Anwendungsgebiete sind die sogenannten Chipkarten. Anordnungen zur elektronischen Verarbeitung von Datensignalen im Zusammenhang mit derartigen Anwendungen sind beispielsweise mit sogenannten Sicherheitsprozessoren ausgeführt. Programme, die auf derartigen Sicherheitsprozessoren zur Bearbeitung von Zugangsprozeduren, Buchungsvorgängen oder dergleichen ablaufen, stellen sich als bevorzugte Ziele von Attacken zum Ausspionieren dar. Eine mögliche Form derartiger Attacken zum Ausspionieren eines Programms auf einem derartigen Sicherheitsprozessor beruht auf Strommessungen an den Ein- und Ausgängen des Prozessors und auf einer Zeitanalyse der auftretenden Ströme. Daraus kann z.B. versucht werden, den Schlüssel einer Verschlüsselungsoperation oder die Funktion eines geheimen Programms zu ermitteln. Andere Attacken beruhen auf einer Analyse eines gelesenen, externen Codes, der für sich beispielsweise ebenfalls verschlüsselt sein kann, im Verhältnis zu der zeitlich folgenden Operation innerhalb des Sicherheitsprozessors.

Zur Aufrechterhaltung bzw. Gewährleistung der durch einen solchen Sicherheitsprozessor bezweckten Zugriffssicherung auf geheime Programme, Daten bzw. Operationen dürfen die genannten Attacken nicht erfolgreich durchführbar sein. Dazu sind geeignete Sicherungsmaßnahmen zu treffen.

Aus der Kurzzusammenfassung des Artikels 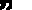 Protection of software algorithms executed on secure modules", erschienen in 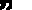 Future Generation Computer Systems", Band 13, Nr. 1, Seiten 55 bis 63, vom Juli 1997, ist bekannt, daß Schleifenstrukturen in Programmen zur elektronischen Datenverarbeitung bedeutende Information über die ausgeführten Algorithmen und ihre Parameter offenbaren könnten. Insbesondere könnten reguläre Programmstrukturen beispielsweise durch Überwachung der Leistungsaufnahme einer Datenverarbeitungsanordnung bei der Bearbeitung derartiger Programme, durch Überwachung von Befehlsabrufen aus externen Speichern oder durch Beobachtung ausgestrahlter elektromagnetischer Energie beobachtet werden. Zur Verschleierung der Einzeleinheiten der vom Prozessor ausgeführten Algorithmen wird die Anwendung von Scheinoperationen vorgeschlagen. Solche Scheinoperationen werden in den eigentlich wirksamen Programmablauf eingefügt, um die Struktur seines zeitlichen Ablaufs unkenntlich zu machen.

Aus der US-PS 5,404,402 ist ein Mikroprozessor mit verringerter Verwundbarkeit gegen Ausspähattacken bekannt. Dem in dieser Druckschrift beschriebenen Mikroprozessor soll der Angreifbarkeit der damit ausgeführten Operationen durch Beobachtung des Verhaltens des internen Taktes begegnet werden. Derartige Beobachtungen, und die daraus abgeleiteten Voraussagen aufeinander folgender Taktimpulse werden durch Modulation des Taktes mit einer im wesentlichen zufälligen Funktion verhindert. Dadurch wird ein unvoraussehbarer Strom von Taktimpulsen erzeugt. Mit diesem Strom von Taktimpulsen wird dann im Prozessor die Datenverarbeitung gemäß eines Sicherheitsalgorithmus vorgenommen.

Aus der EP 0 448 262 A2 sind ein Verfahren sowie ein System zur Durchführung dieses Verfahrens bekannt, mit dem die Ermittlung der Ausführungszeit vorbestimmter Datenverarbeitungsabläufe im Verhältnis zum Auftreten vorhergehenden, beobachtbarer äußerer Vorgänge verhindert werden soll. Das in dieser Druckschrift beschriebene Verfahren enthält einen Schritt einer zufallsgesteuerten Variation der Zeitdauer zwischen dem Auftreten des beobachtbaren äußeren Vorgangs und der Ausführung des vorbestimmten Befehlsablaufs. Zu diesem Schritt gehört einerseits der Schritt, eine oder mehrere Datenverarbeitungs-Zwischenroutinen zwischen dem Auftreten des beobachtbaren, äußeren Vorgangs und der Ausführung des vorbestimmten Programms auszuführen, und zum zweiten ist der Schritt enthalten, die Zeitdauer der genannten Zwischenroutinen nach einer Zufallsfunktion zu variieren. Dies kann dadurch vorgenommen werden, daß zufallsgesteuert eine bestimmte Anzahl von Zwischenroutinen für die Ausführung der genannten Datenverarbeitungsprogramme aus einer Gruppe gespeicherter Routinen mit verschiedenen Bearbeitungsdauern ausgewählt und in den Ablauf des auszuführenden Datenverarbeitungsprogramms eingefügt werden.

Aus der internationalen Patentanmeldung mit der Veröffentlichungsnummer WO 97/33217 sind eine integrierte Schaltung und ein Verfahren zu ihrer Benutzung beschrieben, worin Mittel zur Aufhebung der Korrelation zwischen der Ausführung wenigstens einer Programmbefehlsfolge und den internen oder externen elektrischen Signalen der integrierten Schaltung vorgesehen sind. Diese integrierte Schaltung umfaßt dazu eine Schaltungsanordnung, die ein Register umfaßt, welches entweder von einem Zufallsgenerator mit Hilfe einer Zufallszahl oder durch ein von der Anordnung auszuführendes Hauptprogramm mir einem vorbestimmten Wert geladen wird. Dieses Register ist entweder insgesamt oder teilweise durch eine Unterbrechungs-Auslöselogik benutzt, die einen Eingang aufweist, an dem sie ein unkorreliertes Taktsignal von einem Kallibrierschaltkreis empfängt. Ein Ausgang der Unterbrechungs-Auslöselogik ist über eine Torschaltung an einen Unterbrechungseingang eines von der gesamten Anordnung umfaßten Zentralrechners angeschlossen. Die Torschaltung wird durch ein oder mehrere Datenbits eines weiteren Registers gesteuert. Das bzw. die Datenbits dieses weiteren Registers spielen die Rolle der Maskierung der Unterbrechung des Programmablaufs in einem bestimmten Typ Mikroprozessoren, wie man sie in klassischer Weise vorfindet. Wenn am Unterbrechungseingang des Prozessors eine Unterbrechung präsentiert wird, wird ein Programm zur Behandlung dieser Unterbrechung, welches beispielsweise im Nutzsystem oder im Sekundärprogramm enthalten ist, eine unterschiedliche Behandlungszeit für die unterbrochene Befehlsfolge des Hauptprogramms einführen.

Die Erfindung hat die Aufgabe, das Zeitverhalten einer Anordnung zur elektronischen Verarbeitung von Datensignalen so zu verzerren, daß Zeitattacken erschwert oder unmöglich gemacht werden.

Erfindungsgemäß wird diese Aufgabe gelöst durch eine Anordnung zur elektronischen Verarbeitung von Datensignalen mit einer Befehls-Ausführeinheit ( 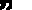 Execution") und einer Befehls-Speichereinheit die über eine Befehls-Holeinheit ( 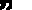 Prefetch") miteinander zum Austausch von Adreß- und/oder Befehlssignalen verknüpft sind, worin zum Ausführen eines Befehls zunächst von der Befehls-Holeinheit ein oder mehrere Adreßsignale an die Befehls-Speichereinheit geleitet werden zum Auswählen vorgebbarer, in der Befehls-Speichereinheit gespeicherter Befehlssignale, welche daraufhin von der Befehls-Speichereinheit über die Befehls-Holeinheit an die Befehls-Ausführeinheit weitergeleitet werden und worin der Befehls-Ausführeinheit außerdem von der Befehls-Holeinheit ein Verriegelungssignal zugeleitet wird, durch das die Ausführung eines jeweiligen Befehls in der Befehls-Ausführeinheit auf die Übermittlung eines oder mehrerer Befehlssignale hin so lange verhindert wird, bis alle zur Ausführung des jeweiligen Befehls notwendigen Befehlssignale der Befehls-Ausführeinheit verfügbar sind (Soll-Ausführungszeitpunkt), ferner umfassend eine Zufallsgeneratoreinheit und eine mir dieser verbundene Sperrstufe, wobei die Sperrstufe in die zur Übertragung des Verriegelungssignals dienende Verknüpfung zwischen der Befehls-Holeinheit und der Befehls-Ausführeinheit eingefügt ist und von der Zufallsgeneratoreinheit zum Verlängern der Dauer des Anliegens des Verriegelungssignals über den Soll-Ausführungszeitpunkt hinaus um eine gemäß einer Zufallsfunktion gewählte Zeitspanne angesteuert wird.

Bei der erfindungsgemäßen Anordnung wird somit das Ausspionieren einer zeitlichen Korrelation zwischen in die Befehls-Ausführeinheit geladenen Befehlen und ihrer Auswirkung auf verschiedene von der Befehls-Ausführeinheit abgreifbare Signale, soweit dieses Ausspionieren sich auf die Beobachtung des Verriegelungssignals stützt, durch Einführen einer zufallsgesteuerten Verzögerung des Andauerns dieses Verriegelungssignals verhindert. Damit ist nicht mehr feststellbar, welche der vorher geladenen Befehle in welcher zeitlichen Zuordnung etwa ausspionierte Signale der Befehls-Ausführeinheit hervorrufen. Durch Verschleierung dieser Zuordnung wird auch der dahinter stehende Zuordnungsalgorithmus verschleiert.

Nach einer vorteilhaften Weiterbildung der Erfindung wird die Dauer des Anliegens des Verriegelungssignals entweder zu jedem über die Befehls-Holeinheit zugeführten Befehlssignal oder nur zu nach einer Zufallsfunktion ausgewählten, über die Befehls-Holeinheit zugeführten Befehlssignalen gemäß einer Zufallsfunktion verlängert. Damit können wahlweise die Verriegelungssignale zu einzelnen Befehlssignalen auch unbeeinflußt bleiben.

Die Erfindung, die eine erhöhte Sicherheit gegenüber 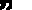 Hackern" bietet, ist bevorzugt einsetzbar in Verschlüsselungs-, Zugangs- und/oder Zugriffssystemen. Ein bevorzugtes Anwendungsgebiet sind Chipkarten.

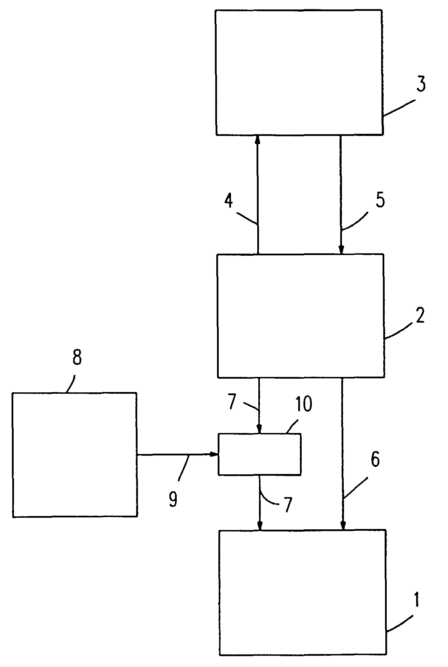

Ein Ausführungsbeispiel der Erfindung ist in der einzigen Figur der Zeichnung dargestellt und wird im nachfolgenden näher beschrieben.

In dem Ausführungsbeispiel der erfindungsgemäßen Anordnung zur elektronischen Verarbeitung von Datensignalen, welches in der Figur dargestellt ist, ist mit dem Bezugszeichen 1 eine Befehls-Ausführeinheit, beispielsweise ein Rechenwerk, bezeichnet. Mit dieser Befehls-Ausführeinheit 1 ist über eine Befehls-Holeinheit 2 eine Befehls-Speichereinheit 3 verknüpft. Diese Verknüpfungen umfassen eine Adreßleitung 4, über die von der Befehls-Holeinheit 2 Adreßsignale an die Befehls-Speichereinheit 3 weitergeleitet werden. Diese Adreßsignale dienen üblicher Weise zur Adressierung, d.h. zum Aufrufen bestimmter, in der Befehls-Speichereinheit 3 gespeicherter Befehle. Die so adressierten Befehle werden über eine Befehlsleitung 5 an die Befehls-Holeinheit 2 übermittelt.

Zur Ausführung der aus der Befehls-Speichereinheit 3 aufgerufenen Befehle müssen diese von der Befehls-Holeinheit 2 der Befehls-Ausführeinheit 1 zugeleitet werden. Zu diesem Zweck dient eine weitere Befehlsleitung 6.

Parallel zu der weiteren Befehlsleitung 6 zwischen der Befehls-Holeinheit 2 und der Befehls-Ausführeinheit 1 ist eine Verriegelungssignalleitung 7 angeordnet. Durch diese Verriegelungssignalleitung 7 wird der Befehls-Ausführeinheit 1 von der Befehls-Holeinheit 2 ein Verriegelungssignal zugeleitet, durch welches die Ausführung der gerade aufgerufenen Befehle in der Befehls-Ausführeinheit 1 so lange verhindert wird, bis alle zur Ausführung des jeweiligen Befehls notwendigen Befehlssignale der Befehls-Ausführeinheit 1 verfügbar sind. Dies bedeutet, daß alle Befehlssignale in der Befehls-Holeinheit 2 zum schnellen Abruf durch die Befehls-Ausführeinheit 1 abgespeichert sind; es kann aber auch bedeuten, daß diese Befehlssignale unmittelbar in der Befehls-Ausführeinheit 1 bereit stehen. Erst dann gibt das Verriegelungssignal die Ausführung des zugehörigen Befehls frei.

Das Ausführungsbeispiel gemäß der Figur umfaßt weiterhin eine Zufallsgeneratoreinheit 8 zum Erzeugen eines Zufallssignals gemäß einer Zufallsfunktion. Dieses Zufallsignal wird über eine Steuerleitung 9 einer Sperrstufe 10 zugeführt. Die Sperrstufe 10 ist in die Verriegelungssignalleitung 7 eingefügt und wird von der Zufallsgeneratoreinheit 8 zum Verlängern der Dauer des Anliegens des Verriegelungssignals über den Soll-Ausführungszeitpunkt des jeweils auszuführenden Befehls hinaus durch das Zufallssignal angesteuert. Mittels der Sperrstufe 10 wird dabei das Verriegelungssignal um eine gemäß diesem Zufallssigal gewählte Zeitspanne über den genannten Soll-Ausführungszeitpunkt hinaus verlängert. Erst danach wird der jeweilige Befehl zur Ausführung in der Befehls-Ausführeinheit 1 freigegeben. Die Dauer des Anlieges des Verriegelungssignals wird somit gemäß einer Zufallsfunktion verlängert.

Eine solche Verlängerung kann für jeden Befehl vorgesehen sein. In Abweichung davon kann die Dauer des Anliegens des Verriegelungssignals nur zu ausgewählten Befehlen verlängert werden. Die Auswahl dieser Befehle erfolgt wiederum gemäß einer von der Zufallsgeneratoreinheit 8 erzeugten Zufallsfunktion. Dies kann beispielsweise dadurch geschehen, daß in der Zufallsgeneratoreinheit mittels einer Zufallsfünktion entschieden wird, ob ein Zufallssignal abgegeben wird oder nicht. Im ersteren Fall enthält das Zufallssignal, welches dann abgegeben wird, eine gemäß einer Zufallsfunktion erzeugte Information über den Wert der Verlängerung der Dauer des Anliegens des Verriegelungssignals. Wird dagegen kein Zufallssignal abgegeben, bleibt die Sperrstufe 10 in der Weise wirkungslos, daß sie für die Verriegelungssignalleitung 7 einen einfachen Leitungsdurchgang bildet.

Durch die Erfindung wird somit eine Attacke zum Ausspionieren eines Programms, welches in der beschriebenen Anordnung abgearbeitet werden soll, mit Hilfe einer Strommessung und einer Zeitanalyse dadurch unmöglich gemacht, daß die Zufallsgeneratoreinheit 8 Verzögerungszyklen zufälligen Auftretens und zufälliger Zeitdauer in die Befehlsausführung einbringt. Dadurch wird der zeitliche Zusammenhang zwischen dem Lesen eines Befehlscodes in der Befehls-Speichereinheit 3 und der zugehörigen Ausführung des Befehls zerstört. Bei diesem Vorgang wird auch das Zeitraster der Befehlsausführung zerstört.

Die Erfindung ist dadurch besonders einfach aufbaubar, daß viele Prozessoren ohnehin eine Anordnung zum Erzeugen und Verarbeiten eines Verriegelungssignals enthalten. Sie dient dazu, bei langsamen Befehls-Speichereinheiten die Ausführung der Befehle vorübergehend anzuhalten, bis der nächste Befehl verfügbar ist. Eine solche Anordnung wird gemäß der Erfindung zusammen mit der Zufallsgeneratoreinheit 8 benutzt, um das Programm bzw. seine Ausführung unvorhersehbar zu verzögern.

Hierzu wird insbesondere in einem Prozessor mit einer autonom mehrstufig ausgeführten Befehls-Holeinheit 2 das Verriegelungssignal, welches die Befehlsausführeinheit 1 bis zur Verfügbarkeit des nächsten Befehls anhält, mir dem Zufallssignal logisch verknüpft. Die gesamte Anordnung (Prozessor) wird so in unvorhersehbarer Weise in ihrer Ausführung verzögert, nachdem ein oder mehrere Befehle aus dem Befehlsspeicher geholt wurden. Eine zeitliche Zuordnung zu den geholten Befehlen ist dann erschwert. Somit wird die Befehlslänge bei der erfindungsgemäßen Anordnung vom Holen des Befehls bis zu seiner Ausführung von der Ausführungshistorie sowie der verwendeten Zufallssequenz abhängig.

Als Variation kann anstelle der Zufallsgeneratoreinheit 8 ein Pseudozufallsgenerator Verwendung finden.

Die Erfindung dient bevorzugt zur Vereitelung einer Zeitanalyse des Prozessors in einer Chipkarte.

## Patentansprüche

1. Anordnung zur elektronischen Verarbeitung von Datensignalen mit einer Befehls-Ausführeinheit ( 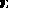 Execution") und einer Befehls-Speichereinheit, die über eine Befehls-Holeinheit ( 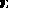 Prefetch") miteinander zum Austausch von Adreß- und/oder Befehlssignalen verknüpft sind, worin zum Ausführen eines Befehls zunächst von der Befehls-Holeinheit ein oder mehrere Adreßsignale an die Befehls-Speichereinheit geleitet werden zum Auswählen vorgebbarer, in der Befehls-Speichereinheit gespeicherter Befehlssignale, welche daraufhin von der Befehls-Speichereinheit über die Befehls-Holeinheit an die Befehls-Ausführeinheit weitergeleitet werden und worin der Befehls-Ausführeinheit außerdem von der Befehls-Holeinheit ein Verriegelungssignal zugeleitet wird, durch das die Ausführung eines jeweiligen Befehls in der Befehls-Ausführeinheit auf die Übermittlung eines oder mehrerer Befehlssignale hin so lange verhindert wird, bis alle zur Ausführung des jeweiligen Befehls notwendigen Befehlssignale der Befehls-Ausführeinheit verfügbar sind (Soll-Ausführungszeitpunkt), ferner umfassend eine Zufallsgeneratoreinheit und eine mit dieser verbundene Sperrstufe, wobei die Sperrstufe in die zur Übertragung des Verriegelungssignals dienende Verknüpfung zwischen der Befehls-Holeinheit und der Befehls-Ausführeinheit eingefügt ist und von der Zufallsgeneratoreinheit zum Verlängern der Dauer des Anliegens des Verriegelungssignals über den Soll-Ausführungszeitpunkt hinaus um eine gemäß einer Zufallsfunktion gewählte Zeitspanne angesteuert wird.

2. Anordnung nach Anspruch 1, dadurch gekennzeichnet, daß die Dauer des Anliegens des Verriegelungssignals zu jedem über die Befehls-Holeinheit zugeführten Befehlssignal gemäß einer Zufallsfunktion verlängert wird.

3. Anordnung nach Anspruch 1, dadurch gekennzeichnet, daß die Dauer des Anliegens des Verriegelungssignals nur zu nach einer Zufallsfunktion ausgewählten, über die Befehls-Holeinheit zugeführten Befehlssignalen gemäß einer Zufallsfunktion verlängert wird.

4. Chipkarte, gekennzeichnet durch eine Anordnung nach einem der vorhergehenden Ansprüche.
